# EUROPEAN PATENT APPLICATION

(11) **EP 1 609 993 A2**
(43) Date of publication of application: **28.12.2005**
(21) Application number: 05253949.1
(22) Date of filing: 24.06.2005
(51) Int. Cl.: F04C 2/107, B29C 33/00

(54) **Method of molding progressive cavity pump stators**

(30) Priority: 24.06.2004 US 877233
(71) Applicant: BAKER HUGHES INCORPORATED, Houston Texas 77027-5177 (US)
(72) Inventor: Neuroth, David H., Claremore OK 74017 (US)
(74) Representative: Jeffrey, Philip Michael

(57) **Abstract**

Devices and methods for construction of a stator for a progressive cavity pump without the off centering effect created by gravity. A stator mold is assembled by placing a center section (20), or core, inside an outer stator housing tube (12) to form a mold assembly. The core has a narrow central portion (22) and a cone-shaped end portion (24,26) at each axial end. The end assemblies provide an interference fit within the outer housing tube and retain the narrow central portion centrally within the housing tube. A mold space (32), or injection space, is defined between the housing tube (12) and the core (20). Traveling spacers (34) are disposed within the mold injection space (32) and are capable of lateral movement therewithin. During injection molding and curing, the mold assembly is oriented in a substantially horizontal position and rotated about its central longitudinal axis.

## Description

The invention relates generally to the design and construction of progressive cavity pumps.

Progressive cavity pumps incorporate a rotor that rotates inside of a stator assembly. These types of pumps are also sometimes referred to as Moineau pumps. The stator assembly has an outer tubular stator housing and an elastomeric lining that is shaped with a number of spiral lobes. The rotor has a helical shape that engages the stator.

In constructing a progressive cavity pump, it is important to form the elastomeric lining as evenly and uniformly as possible. During operation of the pump, the elastomer gets hot. Hot spots can develop where there is a weakness in the elastomeric stator wall. Additionally, unevenness in the thickness of the stator wall can cause the rotor to flex and bend during operation. This unevenness may also create uneven stresses in the elastomer during operation, resulting in early delamination or other damage to the stator.

Even and uniform formation of the elastomeric stator is often difficult in practice since the stator housing is axially quite long. Conventionally, this is accomplished by disposing a metal core inside of a metal stator housing tube to define a mold space therebetween. Elastomer is then extruded into the mold space, heated to cure the elastomer. The elastomer may be injected into the mold space from either or both ends. Alternatively, holes may be drilled through the stator housing tube for the injection of elastomer at points along the length of the tube.

During molding of the stator lining, several factors work against achieving a uniform stator. If the stator is being molded in the horizontal position, the core will be pulled off center by gravity. This will make the elastomer located on the lower side of the core thinner than on the upper side, especially in the middle of the span between the supported ends of the core. The mold might be injected in a vertical position to try to overcome this problem. However, this can be cumbersome in practice due to the very long length of the stator tube.

During molding, the raw injected elastomer is very viscous and, as it flows into the mold to fill the mold space, it may not flow uniformly due to differences in friction between the raw elastomer and the sides of the flow path. Additionally, the elastomer may not be injected at a precisely uniform rate in all quadrants of the mold space. As a result, elastomer can "build up" on one side of the core faster than on the opposing side causing a non-uniform distribution of pressure forces about the surface of the core, deflecting it to one side and creating an off-center condition within the mold. To overcome an off-center condition during injection, it is common in the industry to locate centering pins midway between the injection port and the end of the mold or more frequently, as may be required. These pins are installed in threaded holes in the side of the housing, and they take considerable time to adjust to properly center the core in the mold space. After injection molding is completed, the pins must be removed and the holes plugged with threaded set screws, which then must be ground off to make the outer housing smooth and staked to keep them in place. All of this adds time and cost to the operation. Further, when curing is performed in the horizontal position, the pull of gravity on the core can again cause an off-center position to develop. Horizontal curing is preferred from a material handling and safety point of view, but gravity tends to deflect the core to one side when the warmed rubber softens and flows inside the mold space, allowing the core to deflect off center.

The present invention addresses the problems of the prior art.

The invention provides devices and methods for construction of a stator for a progressive cavity pump. The invention provides a method of curing a stator in the horizontal position without the off centering effect created by gravity.

In preferred embodiments, a stator mold is assembled by placing a center section, or core, inside an outer stator housing tube to form a mold assembly. The core has a narrow central portion and a cone-shaped end portion at each axial end. The end assemblies provide an o-ring seal fit within the outer housing tube and retain the narrow central portion centrally within the housing tube. A mold space, or injection space, is defined between the housing tube and the core.

Traveling spacers are disposed within the injection space and are capable of lateral movement therewithin. Centering pins for support of the core are not needed. During injection molding and curing, the mold assembly is oriented in a substantially horizontal position and rotated about its central longitudinal axis. Elastomer is injected into one end of the mold assembly. Preferably, the cone-shaped end portion of the core includes a plurality of radially spaced-apart injection ports. Preferably also, the ports are uniform in dimension and essentially aligned with the spaces between the lobes of the core and the housing. This allows for even flow into each radial quadrant of the mold space, resulting in more even and uniform molding.

As injection molding occurs, the traveling spacers are urged ahead of the injected elastomer and travel axially within the injection space along the lobe spaces defined within the molding space. When the spacers reach the distal end of the mold assembly, they will abut and partially block bleed ports. This provides a positive indication that the mold is now filled with elastomer and that injection of elastomer is complete.

Rotation of the mold assembly occurs during the injection process as well as during the subsequent curing of the elastomer to guard against an off-center condition. When curing is complete, rotation is stopped, and the core is removed from the mold assembly, leaving a formed stator.
Figure 1 is a side, cross-sectional view an exemplary stator mold assembly constructed in accordance with the present invention.
Figure 2 is an axial cross-sectional view taken along lines 2-2 in Figure 1.
Figure 3 is an axial cross-sectional view taken along lines 3-3 in Figure 1.
Figure 4 is a side, cross-sectional view of the exemplary stator mold assembly of Figures 1-3, shown partway through the injection molding process.
Figure 5 is a side, cross-sectional view of the exemplary stator mold assembly of Figures 1-3, shown near the end of the injection molding process.
Figure 6 is a side, cross-sectional view detailing portions of an exemplary motor and stator rotation system that might be used to rotate the stator housing during injection.

The term "progressive cavity pump," as used in the specification and claims herein, is meant to refer to an entire class of devices, including mud motors, and Moineau fluid pumps that utilize elastomer-lined helical stators and rotatable rotors.

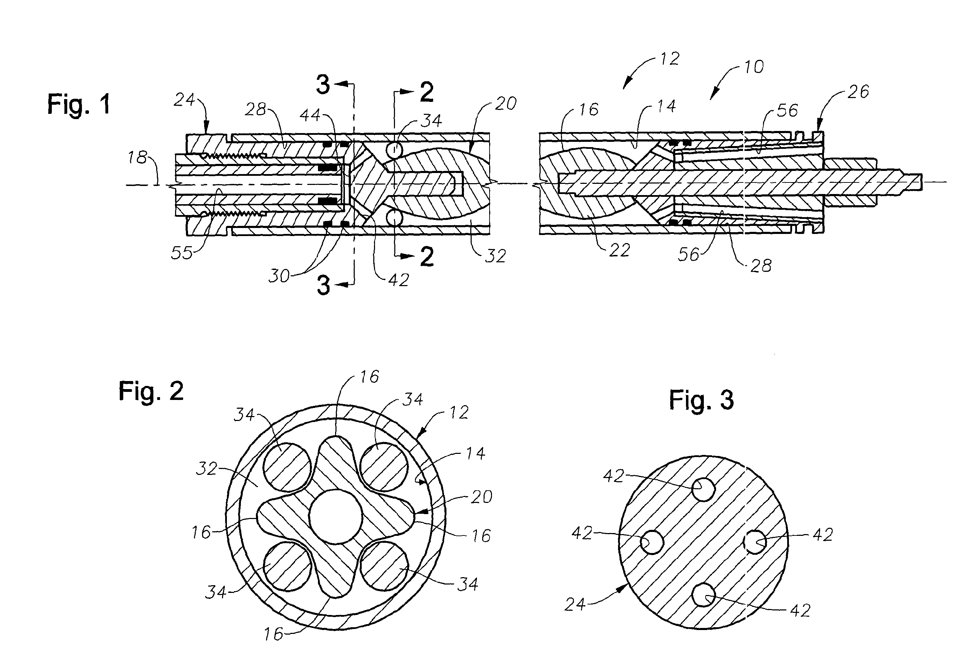

Figures 1-5 illustrate an exemplary mold assembly 10 that is constructed in accordance with the present invention and used for construction of a stator for a progressive cavity pump or motor. The mold assembly 10 includes a tubular metal stator housing 12 that defines an interior bore 14. It is noted that, in practice, the stator housing 12 may be 30 feet or more in length. The housing 12 has a central longitudinal axis, depicted at 18.

A core assembly 20 is removably disposed within the stator housing 12 during the molding and curing process. The core assembly 20 includes a central, reduced diameter portion 22 with an enlarged diameter portion 24, 26 at each axial end. One or both of the enlarged diameter portions 24, 26 are removably secured to the central portion, such as by threaded connection, pinning or other connection methods known in the art, to permit the core assembly 20 to be inserted within and removed from the stator housing 12. The axial ends of the stator housing 12 each present an engagement portion 28 that is sized to retain the enlarged diameter portions 24, 26 of the core assembly 20. When so engaged, the central portion 22 of the core assembly 20 is disposed centrally within the housing 12. Annular seals 30 help to ensure a complete engagement. The central portion 22 of the core assembly 20 is shaped to form several helically-shaped, outwardly-projecting lobes 16, as is known in the art. In the present example, there are four lobes 16 (see Figure 2). However, there may be more or fewer than that number, as desired.

An injection molding space 32 is defined between the reduced diameter portion 22 of the core assembly 20 and the stator housing 12. Traveling spacer elements 34 are located within the injection molding space 32. Preferably, there is one spacer element 34 for each of the lobes 16 of the stator housing 12. As shown in Figure 2, the spacer elements 34 are located in between adjacent lobes 16. The spacer elements 34 help ensure that an even spacing is maintained between the core portion 22 and the surrounding housing 12 during the injection molding process. The spacer elements 34 may be steel ball bearings, rollers, blocks or other shapes. They may be discrete elements (as shown) or be interconnected to one another. In one embodiment, the spacer elements 34 are formed of a high temperature plastic, such as TEFLON®, to make them slippery and easier to move within the mold space 32. Alternatively, the spacer elements 34 might be formed on more common plastics, such as nylon. It is important, however, that the spacer elements 34 be able to move axially within the mold space 32 with minimal frictional drag.

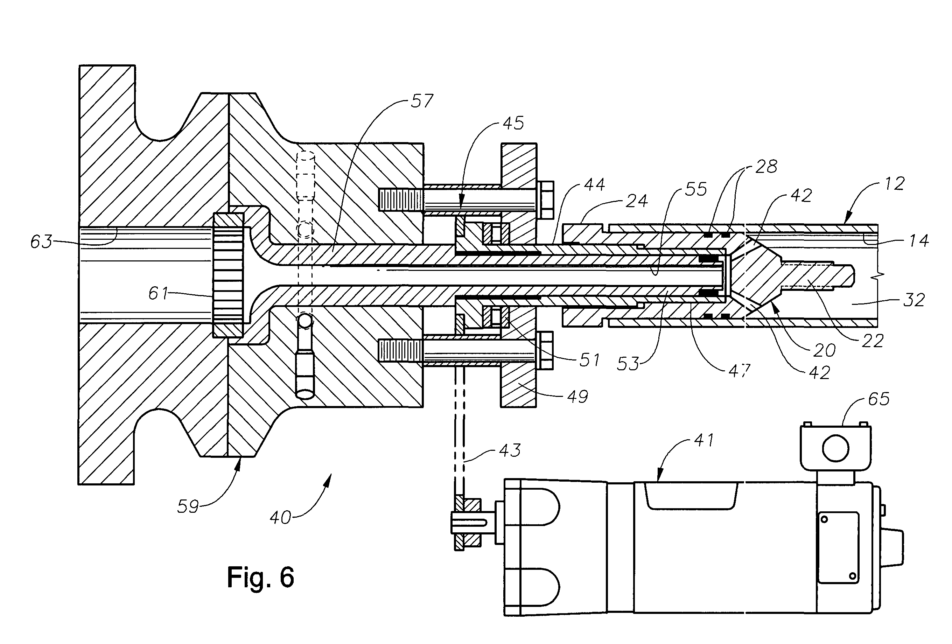

The core assembly 20, and thus, the entire mold assembly 10, is supported for rotation by a motor assembly 40 about the longitudinal axis 18. Figure 6 illustrates an exemplary motor assembly 40 in detail as well as portions of the end portion 24. As Figure 6illustrates, the motor assembly 40 includes a rotary motor 41 that is interconnected via drive chain 43 to sprocket 45. The motor 41 is preferably a variable speed motor that is capable of generating rotation between 0 and 50 rpm. The sprocket 45 is secured about rotary drive member 47which is secured behind retaining plate 49 and thrust bearing 51. A tubular quill 53 is secured radially within the drive member 47 and defines an axial bore 53 through which elastomer may be extruded. A quill extension 57 extends rearwardly from the quill 53 within an extruded housing 59 and is associated with a compression ring 61 that is retained within extrusion passage 63.

A number of elastomer injection passages 42 are disposed through the end portion 24 of the core assembly 20. The injection passages 42 are in fluid communication with a central injection chamber 44. During the injection molding operation, elastomer from an external elastomer supply (not shown) is extruded through the passage 63 past ring 61 and into quill extension 57 and quill bore 55. From there, the elastomer is transmitted through the injection passages 42 and into the flow space 32. As this injection process occurs, the mold assembly 10 is rotated by the motor assembly 40. It is currently preferred that the mold assembly 10 be rotated at a rate between 10 and 30 rpm, as a rotation rate within this range tends to be optimal for preventing an off-center condition and promoting even and uniform molding. It is currently most preferred that the mold assembly 10 be rotated at approximately 20 rpm.

Figure 3 shows an axial cross-section of the enlarged end portion 24 of the core assembly 20. As can be seen there, the elastomer injection passages 42 are radially spaced apart from one another through the end portion 24 to ensure a more even and uniform distribution of elastomer within the molding space 32. It is greatly preferred that the injection passages all be of the same cross-sectional size and length as well as radially spaced from one another in a symmetrical fashion in order to ensure that equal amounts of elastomer are injected into all radial portions of the molding space 32.

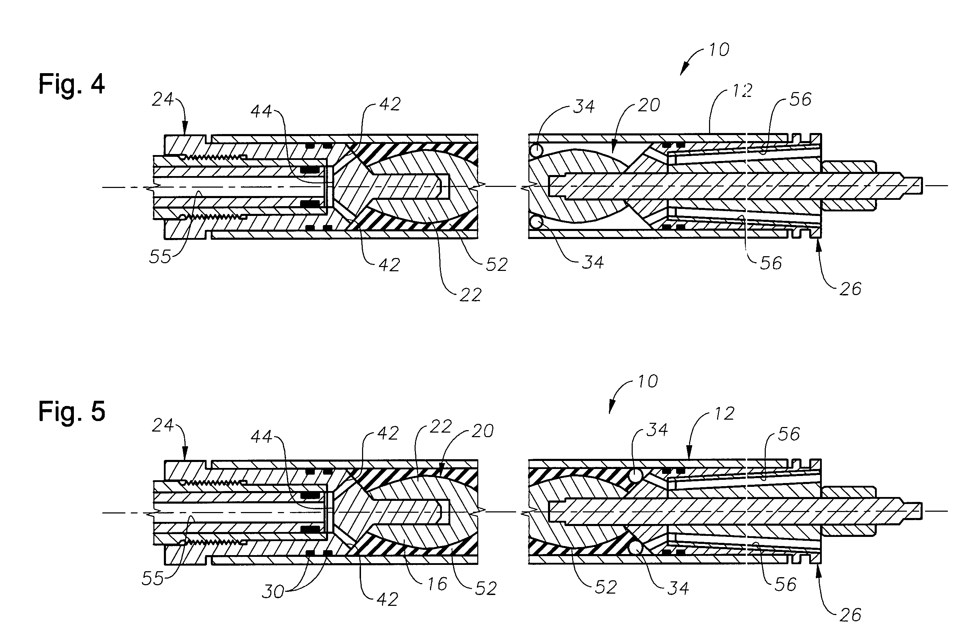

Figure 4 depicts the mold assembly 10 during the injection molding process. The spacers 34 have urged by injected elastomer 52 to be axially translated along the injection molding space 32. Preferably, the spacers 34 each travel between adjacent lobes 16 of the core assembly 20.

Figure 5 illustrates the mold assembly 10 near the end of the injection molding process. At this time, the injected elastomer 52 nearly fills the molding space 32 and has urged the spacers 34 toward the distal end portion 26 of the mold assembly 10. Bleed ports 56 are disposed through the end portion 26 to permit excess elastomer to exit the mold space 32. The spacers 34 will abut the distal end portion 26 and partially block the bleed ports 56. The blocking of the bleed ports 56 by the spacers 34 will provide a positive indicator to a user that the mold space 32 has been filled with elastomer 52. Excess elastomer 52 will exit the bleed ports 56 until the spacers 34 block them, resulting in a noticeable reduction in the rate of elastomer bleed through the ports 56. The combination of the use of spacer elements 34 within the mold space 52 and rotation of the mold assembly 10 best prevents an off center condition from occurring.

When injection of the elastomer 52 is complete, the elastomer 52 is allowed to cure. During the cure time, the motor assembly 40 continues to rotate the mold assembly 10 about axis 18. During curing, the mold assembly 10 may be oriented in either a horizontal or a vertical position. Following curing, the core assembly 20 is removed from the mold assembly 10. In most cases, the spacer elements 34 will be left in the mold assembly 10 until after curing and are removed at the same time as the core assembly 20. The end portions 28 of the stator housing 12 are cut off leaving a finished stator.

The systems and method of the present invention provide a number of advantages over conventional techniques for creating stators. Centering pins are not needed, thereby eliminating the time and cost associated with installing and removing these from a molding assembly. Additionally, the method and system are highly effective in preventing an off-center condition from occurring.

Those of skill in the art will recognize that numerous modifications and changes may be made to the exemplary designs and embodiments described herein and that the invention is limited only by the claims that follow and any equivalents thereof.

## Claims

1. A method of forming a stator for a progressive cavity pump comprising the steps of:
forming a mold assembly having a central core assembly and a stator housing radially surrounding the core assembly to define a mold space therebetween;
injecting elastomer into the mold space; and
rotating the mold assembly about a longitudinal axis during injection.

2. The method of claim 1 wherein at least one spacer element is disposed within the mold space and the spacer element is axially translated within the mold space during injection of elastomer.

3. The method of claim 1 wherein the mold assembly is rotated at a rate of about 10 rpm to about 30 rpm.

4. The method of claim 1 wherein the mold assembly is rotated at a rate of about 20 rpm.

5. The method of claim 1 further comprising the step of rotating the mold assembly about a longitudinal axis while curing the injected elastomer.

6. The method of claim 2 wherein the spacer element abuts a bleed port to restrict flow of elastomer through the bleed port to signal that injection molding is complete.

7. A mold assembly for creation of a stator for a progressive cavity pump, the mold assembly comprising:
a central core assembly;
a stator housing radially surrounding the core assembly to define a mold space therebetween; and
a motor for rotation of the central core assembly and stator housing during injection of elastomer into the mold space.

8. The mold assembly of claim 7 further comprising at least one spacer element disposed within the mold space for axial movement therewithin.

9. The mold assembly of claim 8 wherein the spacer element is formed of TEFLON®.

10. The mold assembly of claim 8 wherein the spacer element is formed of steel.

11. The mold assembly of claim 7 wherein the core assembly includes an axial end portion having a plurality of injection passages disposed therethrough for injection of elastomer into the mold space.

12. The mold assembly of claim 10 wherein the injection passages are radially spaced apart from one another.

13. The mold assembly of claim 7 further comprising an extruder for injection of elastomer into the mold space.

14. The mold assembly of claim 7 wherein the core assembly further comprises an axial end portion at least one bleed port disposed therethrough for excess elastomer to escape the mold space.

15. The mold assembly of claim 7 wherein the core assembly comprises a radially reduced central portion and a pair of radially enlarged axial end sections.

16. The mold assembly of claim 14 wherein the axial end sections fit within the stator housing to secure the core assembly within the stator housing.

17. The mold assembly of claim 7 wherein there is at least one helical lobe path formed within the stator housing.

18. The mold assembly of claim 7 wherein there is at least one helical lobe path formed upon the central core assembly.

19. A mold assembly for creation of a stator for a progressive cavity pump, the mold assembly comprising:
a central core assembly;
a stator housing radially surrounding the core assembly to define a mold space therebetween; and
at least one spacer element disposed within the mold space for axial movement therewithin.

20. The mold assembly of claim 18 further comprising a motor for rotation of the central core assembly and stator housing during injection of elastomer into the mold space.

21. The mold assembly of claim 18 wherein the core assembly includes an axial end portion having a plurality of injection passages disposed therethrough for injection of elastomer into the mold space.

22. The mold assembly of claim 18 wherein the core assembly further comprises an axial end portion at least one bleed port disposed therethrough for excess elastomer to escape the mold space.

23. A method of forming a stator for a progressive cavity pump comprising the steps of:
forming a mold assembly having a central core assembly and a stator housing radially surrounding the core assembly to define a mold space therebetween, the mold space having first and second axial ends;
disposing at least one spacer element within the mold space; and
injecting elastomer into the mold space from the first axial end to convey the spacer element within the mold space toward the second axial end.

24. The method of claim 22 further comprising the step of blocking a bleed port with the spacer element to provide an indication of the completion of elastomer injection.

25. The method of claim 22 further comprising the step of rotating the mold assembly about a longitudinal axis during injection of elastomer.

26. The method of claim 22 wherein the mold assembly is rotated at a rate of about 10 rpm to about 30 rpm.

27. The method of claim 22 wherein the mold assembly is rotated at a rate of about 20 rpm.

28. The method of claim 22 wherein the step of injecting elastomer into the mold space comprises extruding elastomer through a plurality of injection passages proximate the first axial end.

29. A method of forming a stator for a progressive cavity pump comprising thesteps of:
forming a mold assembly having a central core assembly and a stator housing radially surrounding the core assembly to define a mold space therebetween;
injecting elastomer into the mold space; and
rotating the mold assembly about a longitudinal axis during subsequent curing of the elastomer.

30. The method of claim 28 further comprising the step of rotating the mold assembly about a longitudinal axis while elastomer is being injected into the mold space.

31. The method of claim 28 wherein the step of injecting elastomer into the mold assembly further comprises conveying a spacer element within the mold space from a first axial end to a second axial end.

32. The method of claim 28 wherein the mold assembly is rotated at a rate of about 10 rpm to about 30 rpm.

33. The method of claim 28 wherein the mold assembly is rotated at a rate of about 20 rpm.
